# EUROPÄISCHE PATENTSCHRIFT

(11) **EP 1 919 993 B1**
(45) Veröffentlichungstag und Bekanntmachung des Hinweises auf die Patenterteilung: **11.11.2009**
(21) Anmeldenummer: 06792940.6
(22) Anmeldetag: 22.08.2006
(51) Int. Cl.: C08J 9/42

(54) **WASSERDAMPFABWEISENDER OFFENZELLIGER SCHAUMSTOFF UND VERFAHREN ZU SEINER HERSTELLUNG**
WATER-VAPOUR REPELLENT, OPEN-PORED FOAM MATERIAL AND METHOD FOR PRODUCING THE SAME
MOUSSE A ALVEOLES OUVERTES RESISTANT A LA VAPEUR D'EAU ET PROCEDE DE PRODUCTION DE CETTE MOUSSE

(30) Priorität: 22.08.2005 DE 102005039626
(43) Veröffentlichungstag der Anmeldung: 14.05.2008
(73) Patentinhaber: BASF SE, 67056 Ludwigshafen (DE)
(72) Erfinder: BAUMGARTL, Horst, 55122 Mainz (DE); MÖCK, Christof, 68259 Mannheim (DE); VATH, Bernhard, 68259 Mannheim (DE)
(86) Internationale Anmeldenummer: PCT/EP2006/065551
(87) Internationale Veröffentlichungsnummer: WO 2007/023160

(56) Entgegenhaltungen:
- DE-B- 1 107 397
- GB-A- 1 206 993
- US-A- 3 661 630

## Beschreibung

Die Erfindung betrifft einen Schaumstoff aus einer Schaumstoffmatrix mit im Wesentlichen offenen Zellen, der hydrophob / oleophob ausgerüstet ist und dessen Schaumstoffmatrix zusätzlich mit einer wasserdampfundurchlässigen Beschichtung versehen ist. Weiterhin betrifft die Erfindung ein Verfahren zur Herstellung eines solchen Schaumstoffes.

Offenzellige Schaumstoffe aus unterschiedlichen Materialien finden zum Beispiel Anwendung in der Wärme- oder Schalldämmung von Gebäuden und Fahrzeugen. Weiterhin werden offenzellige Schaumstoffe zur akustischen und thermischen Isolierung von Anlagen und Anlagenteilen im Maschinenbau eingesetzt.

Damit sich der Schaumstoff nicht mit Wasser oder Öl voll saugt, ist aus DE-A 100 11 388 bekannt, einen Melaminharz-Schaum durch Beschichtung des Schaumskelettes mit einer hydrophoben und oleophoben Komponente, zum Beispiel einem Fluoralkylester und Silikonharz, hydrophob/oleophob auszurüsten.

Ein Verfahren, mit dem sich ein Melaminharz-Schaumstoff imprägnieren lässt, ist zum Beispiel aus EP-A 0 451 535 bekannt. Hierzu wird zunächst ein Bindemittel auf die Oberfläche des Melaminharz-Schaumstoffes aufgetragen und dieser anschließend mit dem Bindemittel durch einen Walzenspalt zweier sich gegensinnig bewegenden Walzen geführt, wobei der Walzenspalt kleiner eingestellt ist, als die unbeeinflusste Dicke des Melaminharz-Schaumstoffes. Dem Bindemittel kann ein Zusatz zur oleophoben und/oder hydrophoben Einstellung zugegeben sein.

Aufgabe der vorliegenden Erfindung ist es, einen offenzelligen Schaumstoff mit hydrophoben/oleophoben Eigenschaften bereitzustellen, der zusätzlich eine reduzierte Wasserdampfaufnahme aufweist.

Gelöst wird die Aufgabe durch einen Schaumstoff aus einer Schaumstoffmatrix mit im Wesentlichen offenen Zellen und mit einer Imprägnierung, die im Wesentlichen aus einem gegebenenfalls weitere Substituenten enthaltenden Polyvinylidenhalogenid-(Co)polymer und zusätzlich aus einem Fluorcarbonharz und/oder Silikonharz aufgebaut ist.

Geeignete Schaumstoffe im Rahmen der vorliegenden Erfindung sind zum Beispiel solche, bei denen die Schaumstoffmatrix aus einem Melamin/Formaldehyd-Polykondensat aufgebaut ist. Weitere geeignete Schaumstoffe sind solche, bei denen die Schaumstoffmatrix ein Harnstoff/Formaldehyd-Polykondensat ist und solche, bei denen die Schaumstoffmatrix ein offenzelliger Polyurethanschaumstoff ist. Bevorzugt ist die Schaumstoffmatrix aus einem Melamin/Formaldehyd-Polykondensat aufgebaut.

Bei einem besonders bevorzugten Melamin/Formaldehyd-Polykondensat beträgt das Verhältnis von Melamin zu Fomaldehyd zur Herstellung der Schaumstoffmatrix 1 : 1,2 bis 1 : 4.

Solche Melamin/Formaldehyd-Schaumstoffe sind zum Beispiel aus EP-B 0 071 672 bekannt. Demnach werden die Schaumstoffe hergestellt durch Verschäumen einer wässrigen Lösung eines Melamin/Formaldehyd-Kondensationsproduktes, wobei die Lösung einen Emulgator, ein saures Härtungsmittel und ein Treibmittel, vorzugsweise einen C₅- bis C₇-Kohlenwasserstoff, enthält. Anschließend wird das Melamin/Fomialdehyd-Kondensat bei erhöhter Temperatur ausgehärtet.

Eine Imprägnierung des Schaumstoffes aus einer Schaumstoffmatrix mit den wesentlichen offenen Zellen mit einem gegebenenfalls weitere Substituenten enthaltenden Polyvinylidenhalogenid-(Co)polymer führt zu einer Reduktion der Wasserdampfaufnahme des Schaumstoffes. Diese reduzierte Wasserdampfaufnahme ermöglicht es, den Schaumstoff auch in Umgebungen mit hoher Luftfeuchtigkeit oder in Umgebungen, in denen Wasserdampf enthalten ist, ohne erkennbare Verschlechterung der Eigenschaften des Schaumstoffes, einzusetzen. Darüber hinaus wird die Gewichtszunahme des Schaumstoffs infolge der Absorption von Wasserdampf reduziert.

Als Halogenide des Polyvinylidenhalogenides oder des Polyvinylidenhalogenid-Copolymers eignen sich zum Beispiel Chlorid oder Fluorid. Bevorzugt ist Chlorid.

Weitere Substituenten, mit denen das Polyvinylidenhalogenid oder das Polyvinylidenhalogenid-Copolymer gegebenenfalls substituiert sein kann, sind zum Beispiel Alkyl, Aryl oder funktionelle Gruppen, zum Beispiel Ester oder Nitril. Bevorzugt enthält das Polyvinylidenhalogenid-(Co)polymer keine weiteren Substituenten.

Unter Polyvinylidenhalogenid-(Co)polymer sind sowohl nicht-copolymerisiertes Polyvinylidenhalogenid als auch copolymerisiertes Polyvinylidenhalogenid zu verstehen. Eine Copolymerisierung kann zum Beispiel mit Vinylhalogenid oder Acrylnitril durchgeführt werden. Bevorzugt ist das Polyvinylidenhalogenid-Copolymer mit Vinylhalogenid copolymerisiert. Bevorzugtes Vinylhalogenid ist Vinylchlorid.

Um den Schaumstoff zusätzlich zur reduzierten Wasserdampfaufnahme auch hydrophob und/oder oleophob auszurüsten, um die Aufnahme von flüssigem Wasser und/oder Öl zu vermeiden, enthält die Imprägnierung zusätzlich handelsübliche Imprägniermittel aus Fluorcarbonharzen oder Silikonharzen.

In den Imprägniermitteln liegen das Fluorcarbonharz und/oder Silikonharz vorzugsweise in Form emulgierter Tröpfchen in Wasser oder leicht flüchtigen organischen Lösungsmitteln, z.B. Methanol, Ethanol, Aceton, Pentan, vor. Aus Gründen der Nichtbrennbarkeit ist Wasser bevorzugt.

Durch die Imprägnierung erhöht sich die Dichte des Schaumstoffes. Diese Dichteerhöhung resultiert daraus, dass sich das Material, mit welchem der Schaumstoff imprägniert wird, um die Stege des Schaumstoffes legt und so den Querschnitt der Stege vergrößert. Das Porenvolumen wird hierdurch geringfügig verringert. Im Allgemeinen ergibt sich durch die Imprägnierung mit dem Polyvinylidenhalogenid-(Co)polymer eine Dichteerhöhung von 5 bis 20 %.

Zusätzlich zur Imprägnierung mit wasser- und wasserdampfabweisenden Substanzen ist der Schaumstoff in einer bevorzugten Ausführungsform mit einem Flammschutzmittel imprägniert. Geeignete Flammschutzmittel sind zum Beispiel Halogenverbindungen (Brom- und Chlorverbindungen), Phosphorverbindungen, Stickstoffverbindungen, intumeszierende Systeme, mineralische Stoffe (auf Basis von Aluminium und Magnesium) sowie Borax, Sb₂O₃ und Nanokomposit. Zur Verbesserung der brandhemmenden Eigenschaften von Kunststoffen werden zum Beispiel Aluminiumtrihydroxid, bromierte Verbindungen, chlorierte Phosphorverbindungen, nicht-halogenierte Phosphorverbindungen, Chlorparaffine, Magnesiumdihydroxid, Melamine und Borate eingesetzt. Geeignete, dem Fachmann bekannte Flammschutzmittel sind zum Beispiel in der Broschüre "Flammschutzmittel, häufig gestellte Fragen" der European Flame Retardants Association, Januar 2004, beschrieben.

Die Herstellung des erfindungsgemäßen Schaumstoffes erfolgt vorzugsweise nach einem Verfahren mit folgenden Schritten:
(a) Auftragen einer Vinylidenhalogenid-(Co)polymer und zusätzlich Fluorcarbonharz und/oder silikonharz enthaltenden Dispersion auf den Schaumstoff oder Tränken des Schaumstoffes mit der Dispersion,
(b) Pressen des Schaumstoffes mit der Dispersion, um die Dispersion in die Poren des Schaumstoffes einzubringen und
(c) Trocknen des Schaumstoffes mit der Dispersion bei einer Temperatur im Bereich von 40 bis 100°C,
wobei die Schritte (a) und (b) aufeinander folgend, zuerst Schritt (a), dann Schritt (b) durchgeführt werden.

Alternativ kann die Herstellung des erfindungsgemäßen Schaumstoffs nach einem Verfahren mit den folgenden Schritten erfolgen:
(a) Auftragen einer Polyvinylidenhalogenid-(Co)polymer enthaltenden Dispersion auf den Schaumstoff oder Tränken des Schaumstoffes mit der Dispersion,
(b) Pressen des Schaumstoffes mit der Dispersion, um die Dispersion in die Poren des Schaumstoffes einzubringen und
(c) Trocknen des Schaumstoffes mit der Dispersion bei einer Temperatur im Bereich von 40 bis 100°C,
(d) Auftragen von Fluorcarbonharz und/oder Silikonharz auf den Schaumstoff oder Tränken des Schaumstoffs mit Fluorcarbonharz und/oder Silikonharz nach dem Trocknen in Schritt (c),
wobei die Schritte (a) und (b) aufeinanderfolgend, zuerst Schritt (a), dann Schritt (b) durchgeführt werden.

Das Auftragen der Dispersion auf den Schaumstoff und das Pressen des Schaumstoffes können zum Beispiel wie in EP-A 0 451 535 beschrieben, durchgeführt werden. Hierzu wird der Schaumstoff zwischen zwei sich in gleichsinniger Richtung drehende Walzen hindurchgeführt, wobei der Abstand der Walzen so gewählt ist, dass der Schaumstoff jeweils zusammengepresst wird. Die Dispersion, mit der der Schaumstoff imprägniert wird, wird auf die horizontal nebeneinander liegenden Walzen aufgegeben, so dass sich an der Stelle, an der der Schaumstoff durch die Walzen hindurchbewegt wird, ein Flüssigkeitspool ausbildet. Durch die Rotationsbewegung der Walzen und das Pressen des Schaumstoffes wird die Dispersion, die im Flüssigkeitspool enthalten ist, in den Schaumstoff eingepresst. Die Dispersion legt sich um die Stege des Schaumstoffes und bildet so nach dem Aushärten eine geschlossene Oberfläche.

Nach dem Aufbringen der Dispersion und dem Pressen des Schaumstoffes wird der so imprägnierte Schaumstoff vorzugsweise in einem Trockenofen bei einer Temperatur im Bereich von 40 bis 100°C getrocknet. Hierbei verfilmt die Dispersion und bildet eine Wasserdampfsperrschicht auf den Zellstegen.

Sollten die Stege des Schaumstoffes nach einmaligem Durchführen des Verfahrens noch nicht vollständig mit der Imprägnierung umhüllt sein oder die Schichtdicke der Imprägnierung noch zu niedrig sein, so kann der in einer ersten Stufe imprägnierte Schaumstoff nach dem gleichen Verfahren auch mehrere Male das Verfahren zur Imprägnierung durchlaufen. Hierdurch wird in jedem Schritt die Dicke der die Stege umhüllenden Schicht erhöht.

Neben dem Auftragen der Substanz, mit der der Schaumstoff imprägniert werden soll und dem anschließenden Pressen ist es ebenso möglich, den Schaumstoff mit der Substanz, mit der dieser imprägniert werden soll, zu tränken und anschließend zu pressen. Zum Tränken wird der Schaumstoff zum Beispiel durch ein Bad, welches die mindestens eine Substanz enthält, mit der der Schaumstoff imprägniert werden soll, gezogen. Es ist jedoch auch jedes weitere, dem Fachmann bekannte Verfahren denkbar, mit dem der Schaumstoff getränkt werden kann.

Das zur Imprägnierung verwendete Polyvinylidenhalogenid liegt vorzugsweise als Dispersion in einem Lösungsmittel vor. Geeignete Lösungsmittel sind zum Beispiel kurzkettige Alkohole, zum Beispiel Methanol oder Ethanol, oder Wasser. Besonders bevorzugt als Lösungsmittel ist Wasser.

Die Dispersion, mit der der Schaumstoff imprägniert wird, enthält im Allgemeinen 5 bis 60 Gew.-% Polyvinylidenhalogenid-(Co)polymer. Bevorzugt enthält die Dispersion 10 bis 30 Gew.-% Polyvinylidenhalogenid-(Co)polymer.

Um zusätzlich zur Wasserdampfreduzierung auch eine Wasserabweisung des Schaumstoffes zu erreichen, kann die Dispersion zusätzlich Fluorcarbonharz und/oder Silikonharz enthalten. In einer ersten Verfahrensvariante werden sowohl das Polyvinyl-idenhalogenid-(Co)polymer als auch das Fluorcarbonharz und/oder Silikonharz als Mischung in einem Schritt auf den Schaumstoff aufgetragen oder der Schaumstoff wird mit der Mischung getränkt.

In einer weiteren Verfahrensvariante ist es auch möglich, zunächst den Schaumstoff mit der Polyvinylidenhalogenid-(Co)polymer enthaltenden Dispersion zu imprägnieren und anschließend den Schaumstoff in einem zweiten Imprägnierschritt mit einer Fluorcarbon- oder Silikonharz enthaltenden Dispersion zu tränken. Auf diese Weise entsteht ein besonders hydrophob / oleophob ausgerüsteter Schaumstoff mit wasserdampfsperrenden Zellstegen. Anschließend wird der Schaumstoff getrocknet. Eine erste Trocknung kann auch direkt nach der Imprägnierung mit der Polyvinylidenhalogenid-(Co)polymer enthaltenden Dispersion erfolgen. Nach der Tränkung mit der Fluorcarbon- oder Silikonharz enthaltenden Dispersion ist bei dieser Verfahrensvariante dann ein zweiter Trocknungsschritt erforderlich.

Bei allen Verfahrensvarianten erfolgt das Pressen jeweils vorzugsweise wie in EP-A 0 451 535 beschrieben, indem der Schaumstoff durch einen definierten Spalt zwischen zwei gegensinnig rotierenden, parallel ausgerichteten Walzen hindurchgeführt wird.

Neben dem Durchführen des Schaumstoffes durch einen Spalt zwischen zwei gegensinnig rotierenden Walzen ist es auch möglich, den zum Imprägnieren notwendigen Druck dadurch auszuüben, dass der mit den Dispersionen getränkte Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Auch kann das Pressen durch jede weitere dem Fachmann bekannte Vorrichtung durchgeführt werden.

Die Harze, mit denen der Schaumstoff imprägniert wird, liegen in beiden Ausführungsformen vorzugsweise als Dispersion in einem leichtflüchtigen Lösungsmittel vor. Geeignete Lösungsmittel sind zum Beispiel Wasser oder leichtflüchtige Alkohole wie Methanol oder Ethanol. Besonders bevorzugt liegt das Harz in wässriger Dispersion vor.

Wird der erfindungsgemäße Schaumstoff in einer Umgebung mit 30°C und 90 % relativer Luftfeuchtigkeit eingesetzt, ergibt sich eine Reduktion der Wasserdampfaufnahme von 20 bis 90 %.

Ein bevorzugtes Einsatzgebiet für den erfindungsgemäßen Schaumstoff ist die Luftfahrt. Durch die Reduzierung der Wasserdampfaufnahme wird eine Massenerhöhung des Schaumstoffes durch Wasserdampfabsorption verringert. Da eine Gewichtszunahme in der Luftfahrt zu einem erhöhten Kerosinverbrauch führt, ist eine solche Massenerhöhung durch Wasserdampfabsorption möglichst zu vermeiden. Dies kann durch Verwendung des erfindungsgemäßen Schaumstoffes erreicht werden.

### Beispiel

### 1. Vergleichsbeispiel

Ein nicht-imprägnierter Melamin/Formaldehyd-Schaumstoff wird zunächst 24 h lang bei 100°C getrocknet und anschließend für 20 h einer relativen Feuchtigkeit von 90 % bei 30°C ausgesetzt. Der Schaumstoff absorbiert 18 bis 20 Gew.-% Wasserdampf.

### 2. Vergleichsbeispiel

Ein mit einer Fluorcarbonharzemulsion zur Hydrophobierung / Oleophobierung imprägnierter Melaminharzschaumstoff wird zunächst 24 h bei 100°C getrocknet und anschließend für 20 h einer relativen Feuchtigkeit von 90 % bei 30°C ausgesetzt. Der Schaumstoff absorbiert 17 bis 19 Gew.-% Wasserdampf.

### 3. Vergleichsbeispiel

Ein offenzelliger Melamin/Formaldehyd-Schaumstoff wird mit einer wässrigen Dispersion mit 20 Gew.-% Polyvinylidenchlorid imprägniert und anschließend 24 h bei 100°C getrocknet. Der getrocknete Schaumstoff wird einer relativen Feuchte von 90 % bei 30°C für 20 h ausgesetzt. Der Schaumstoff absorbiert 5 bis 6 Gew.-% Wasserdampf.

## Patentansprüche

1. Schaumstoff aus einer Schaumstoffmatrix mit im Wesentlichen offenen Zellen und mit einer Imprägnierung, die im Wesentlichen aus einem gegebenenfalls weitere Substituenten enthaltenden Polyvinylidenhalogenid-(Co)polymer und zusätzlich aus einem Fluorcarbonharz und/oder Silikonharz aufgebaut ist.

2. Schaumstoff nach Anspruch 1, **dadurch gekennzeichnet, dass** das Halogenid ein Chlorid oder Fluorid ist.

3. Schaumstoff nach Anspruch 1 oder 2, **dadurch gekennzeichnet, dass** die Schaumstoffmatrix aus einem Melamin/Formaldehyd-Polykondensat aufgebaut ist.

4. Schaumstoff nach Anspruch 3, **dadurch gekennzeichnet, dass** das Verhältnis von Melamin zu Formaldehyd zur Herstellung der Schaumstoffmatrix 1 : 1,2 bis 1 : 4 beträgt.

5. Schaumstoff nach Anspruch 1 oder 2, **dadurch gekennzeichnet, dass** die Schaumstoffmatrix ein Harnstoff/Formaldehyd-Polykondensat ist.

6. Schaumstoff nach Anspruch 1 oder 2, **dadurch gekennzeichnet, dass** die Schaumstoffmatrix ein offenzelliger Polyurethanschaumstoff ist.

7. Schaumstoff nach einem der Ansprüche 1 bis 6, **dadurch gekennzeichnet, dass** die Imprägnierung im Wesentlichen aus einer Mischung aus dem Polyvinylidenhalogenid-(Co)polymer und dem Fluorcarbonharz und/oder Silikonharz besteht.

8. Schaumstoff nach einem der Ansprüche 1 bis 6, **dadurch gekennzeichnet, dass** die Imprägnierung aus zwei getrennten Schichten aufgebaut ist, die jeweils im Wesentlichen Fluorcarbonharz und/oder Silikonharz bzw. das Polyvinyl-idenhalogenid-(Co)polymer enthalten.

9. Schaumstoff nach einem der Ansprüche 1 bis 8, **dadurch gekennzeichnet, dass** das Polyvinylidenhalogenid-Copolymer mit Vinylhalogenid copolymerisiert ist.

10. Verfahren zur Herstellung eines Schaumstoffes nach einem der Ansprüche 1 bis 9, **gekennzeichnet durch** folgende Schritte:
(a) Auftragen einer Vinylidenhalogenid-(Co)polymer und zusätzlich Fluorcarbonharz und/oder Silikonharz enthaltenden Dispersion auf den Schaumstoff oder Tränken des Schaumstoffes mit der Dispersion,
(b) Pressen des Schaumstoffes mit der Dispersion, um die Dispersion in die Poren des Schaumstoffes einzubringen und
(c) Trocknen des Schaumstoffes mit der Dispersion bei einer Temperatur im Bereich von 40 bis 100°C,
wobei die Schritte (a) und (b) aufeinanderfolgend, zuerst Schritt (a), dann Schritt (b) durchgeführt werden.

11. Verfahren zur Herstellung eines Schaumstoffes nach einem der Ansprüche 1 bis 9, **gekennzeichnet durch** folgende Schritte:
(a) Auftragen einer Vinylidenhalogenid-(Co)polymer enthaltenden Dispersion auf den Schaumstoff oder Tränken des Schaumstoffes mit der Dispersion,
(b) Pressen des Schaumstoffes mit der Dispersion, um die Dispersion in die Poren des Schaumstoffes einzubringen und
(c) Trocknen des Schaumstoffes mit der Dispersion bei einer Temperatur im Bereich von 40 bis 100°C,
(d) Auftragen von Fluorcarbonharz und/oder Silikonharz auf den Schaumstoff oder Tränken des Schaumstoffs mit Fluorcarbonharz und/oder Silikonharz nach dem Trocknen in Schritt (c),
wobei die Schritte (a) und (b) aufeinanderfolgend, zuerst Schritt (a), dann Schritt (b) durchgeführt werden.

12. Verfahren nach Anspruch 11, **dadurch gekennzeichnet, dass** der Schaumstoff mit dem Fluorcarbonharz und/oder Silikonharz gepresst wird, um das Harz in die Poren des Schaumstoffes einzubringen, wobei das Auftragen oder Tränken des Schaumstoffes mit dem Harz und das Pressen aufeinanderfolgend erfolgt, und gegebenenfalls anschließend bei einer Temperatur im Bereich zwischen 40 und 100°C getrocknet wird.

13. Verfahren nach einem der Ansprüche 10 bis 12, **dadurch gekennzeichnet, dass** als Lösemittel für die Dispersion Wasser verwendet wird.

14. Verfahren nach einem der Ansprüche 10 bis 13, **dadurch gekennzeichnet, dass** die Dispersion 5 bis 60 Gew.-% Polyvinylidenhalogenid-(Co)polymer enthält.

## Claims

1. A foam which comprises a foam matrix having essentially open cells and having an impregnation which is made up essentially of a polyvinylidene halide (co)polymer which may optionally comprise further substituents and additionally of a fluorocarbon resin and/or silicone resin.

2. The foam according to claim 1, wherein the halide is a chloride or fluoride.

3. The foam according to claim 1 or 2, wherein the foam matrix is made up of a melamine-formaldehyde polycondensate.

4. The foam according to claim 3, wherein the ratio of melamine to formaldehyde for producing the foam matrix is from 1 : 1.2 to 1 : 4.

5. The foam according to claim 1 or 2, wherein the foam matrix is a urea-formaldehyde polycondensate.

6. The foam according to claim 1 or 2, wherein the foam matrix is an open-celled polyurethane foam.

7. The foam according to any of claims 1 to 6, wherein the impregnation consists essentially of a mixture of the polyvinylidene halide (co)polymer and the fluorocarbon resin and/or silicone resin.

8. The foam according to any of claims 1 to 6, wherein the impregnation is made up of two separate layers which respectively comprise essentially fluorocarbon resin and/or silicone resin or the polyvinylidene halide (co)polymer.

9. The foam according to any of claims 1 to 8, wherein the polyvinylidene halide copolymer is copolymerized with vinyl halide.

10. A process for producing a foam acording to any of claims 1 to 9, which comprises the following steps:
(a) application of a dispersion comprising vinylidene halide (co)polymer and additionally fluorocarbon resin and/or silicone resin to the foam or soaking of the foam with the dispersion,
(b) pressing of the foam together with the dispersion in order to introduce the dispersion into the pores of the foam and
(c) drying of the foam together with the dispersion at a temperature in the range from 40 to 100°C,
with the steps (a) and (b) being carried out successively, firstly step (a) then step (b).

11. A process for producing a foam according to any of claims 1 to 9, which comprises the following steps:
(a) application of a dispersion comprising vinylidene halide (co)polymer to the foam or soaking of the foam with the dispersion,
(b) pressing of the foam together with the dispersion in order to introduce the dispersion into the pores of the foam and
(c) drying of the foam together with the dispersion at a temperature in the range from 40 to 100°C,
(d) application of fluorocarbon resin and/or silicone resin to the foam or soaking of the foam with fluorocarbon resin and/or silicone resin after the drying in step (c),
with the steps (a) and (b) being carried out successively, firstly step (a) then step (b).

12. The process according to claim 11, wherein the foam together with the fluorocarbon resin and/or silicone resin is pressed in order to introduce the resin into the pores of the foam, with the application or soaking of the foam with the resin and the pressing being carried out successively, and is, if appropriate, subsequently dried at a temperature in the range from 40 to 100°C.

13. The process according to any of claims 10 to 12, wherein water is used as solvent for the dispersion.

14. The process according to any of the claims 10 to 13, wherein the dispersion comprises from 5 to 60% by weight of polyvinylidene halide (co)polymer.

## Revendications

1. Mousse en une matrice de mousse avec des alvéoles essentiellement ouvertes et avec une imprégnation, qui est constituée essentiellement par un (co)polymère de poly(halogénure de vinylidène) contenant le cas échéant d'autres substituants et en outre une résine fluorocarbonée et/ou une résine siliconée.

2. Mousse selon la revendication 1, **caractérisée en ce que** l'halogénure est un chlorure ou un fluorure.

3. Mousse selon la revendication 1 ou 2, **caractérisée en ce que** la matrice de mousse est constituée par un produit de polycondensation de mélamine/formaldéhyde.

4. Mousse selon la revendication 3, **caractérisée en ce que** le rapport de mélamine à formaldéhyde pour la préparation de la matrice de mousse est de 1:1,2 à 1:4.

5. Mousse selon la revendication 1 ou 2, **caractérisée en ce que** la matrice de mousse est un produit de polycondensation d'urée/formaldéhyde.

6. Mousse selon la revendication 1 ou 2, **caractérisée en ce que** la matrice de mousse est une mousse de polyuréthane à alvéoles ouvertes.

7. Mousse selon l'une quelconque des revendications 1 à 6, **caractérisée en ce que** l'imprégnation est essentiellement constituée par un mélange de (co)polymère de poly(halogénure de vinylidène) et de résine fluorocarbonée et/ou de résine siliconée.

8. Mousse selon l'une quelconque des revendications 1 à 6, **caractérisée en ce que** l'imprégnation est constituée par deux couches séparées qui contiennent à chaque fois essentiellement la résine fluorocarbonée et/ou la résine siliconée ou, selon le cas, le (co)polymère de poly(halogénure de vinylidène).

9. Mousse selon l'une quelconque des revendications 1 à 8, **caractérisée en ce que** le copolymère de poly(halogénure de vinylidène) est copolymérisé avec un halogénure de vinyle.

10. Procédé pour la préparation d'une mousse selon l'une ou plusieurs des revendications 1 à 9, **caractérisé par** les étapes suivantes :
(a) application d'une dispersion contenant un (co)polymère d'halogénure de vinyle et en outre une résine fluorocarbonée et/ou une résine siliconée sur la mousse ou imprégnation de la mousse avec la dispersion,
(b) pressage de la mousse avec la dispersion, pour introduire la dispersion dans les pores de la mousse et
(c) séchage de la mousse avec la dispersion à une température dans la plage de 40 à 100°C, où les étapes (a) et (b) sont réalisées consécutivement, d'abord l'étape (a), puis l'étape (b).

11. Procédé pour la préparation d'une mousse selon l'une ou plusieurs des revendications 1 à 9, **caractérisé par** les étapes suivantes :
(a) application d'une dispersion contenant un (co)polymère d'halogénure de vinyle sur la mousse ou imprégnation de la mousse avec la dispersion,
(b) compression de la mousse avec la dispersion, pour introduire la dispersion dans les pores de la mousse et
(c) séchage de la mousse avec la dispersion à une température dans la plage de 40 à 100°C,
(d) application de la résine fluorocarbonée et/ou la résine siliconée sur la mousse ou imprégnation de la mousse avec une résine fluorocarbonée et/ou une résine siliconée après le séchage dans l'étape (c),
où les étapes (a) et (b) sont réalisées consécutivement, d'abord l'étape (a), puis l'étape (b).

12. Procédé selon la revendication 11, **caractérisé en ce que** la mousse est pressée avec la résine fluorocarbonée et/ou la résine siliconée, pour introduire la résine dans les pores de la mousse, l'application ou l'imprégnation de la mousse par la résine et le pressage étant réalisés consécutivement, le cas échéant séchée consécutivement à une température dans la plage entre 40 et 100°C.

13. Procédé selon l'une quelconque des revendications 10 à 12, **caractérisé en ce que** de l'eau est utilisée comme solvant pour la dispersion.

14. Procédé selon l'une quelconque des revendications 10 à 13, **caractérisé en ce que** la dispersion contient 5 à 60% en poids de (co)polymère de poly(halogénure de vinylidène).
